# EUROPEAN PATENT SPECIFICATION

(11) **EP 2 760 952 B1**
(45) Date of publication and mention of the grant of the patent: **21.03.2018**
(21) Application number: 12835164.0
(22) Date of filing: 28.09.2012
(51) Int. Cl.: C09D 175/02, E01C 23/16

(54) **FLEXIBLE PAVEMENT MARKINGS**
FLEXIBLE STRASSENMARKIERUNGEN
PRODUITS DE MARQUAGE AU SOL SOUPLES

(30) Priority: 30.09.2011 US 201161541437 P
(43) Date of publication of application: 06.08.2014
(73) Proprietor: 3M Innovative Properties Company, St. Paul, MN 55133-3427 (US)
(72) Inventor: KUGEL, Alexander, J., Saint Paul, MN 55133-3427 (US); KAPFER, Craig, A., Saint Paul, MN 55133-3427 (US)
(74) Representative: Vossius & Partner Patentanwälte Rechtsanwälte mbB
(86) International application number: PCT/US2012/057794
(87) International publication number: WO 2013/049488

(56) References cited:
- EP-A2- 0 420 426
- EP-B1- 0 988 333
- WO-A1-2010/101560
- WO-A1-2010/101560
- KR-A- 20070 020 328
- US-A1- 2004 258 837
- US-A1- 2007 208 156
- US-A1- 2010 247 904
- "ETHACURE 90 Aliphatic Curing Technology", , 9 February 2013 (2013-02-09), XP055209301, Retrieved from the Internet: URL:http://www.virtualpu.com/uploads/expo_ trend_attachments/0-2013-02-09-19:16:54-ET HACURE90_overview_PPT.pdf [retrieved on 2015-08-25]

## Description

### Technical Field

The present application generally relates to flexible pavement markings, methods of making flexible pavement markings, and compositions of flexible pavement markings.

### Background

Pavement markings (*e.g.*, paints, tapes, and individually mounted articles) guide and direct motorists and pedestrians traveling along roadways and paths. Paint was a preferred pavement marking for many years. However, modem liquid pavement marking materials offer significant advantages over paint, such as increased visibility, retroreflectance, improved durability, and temporary and/or removable marking options.

For example, pavement markers made with liquid pavement marking materials may include reflective optical elements adhered to the pavement surface. Liquid pavement markings can use glass microspheres for retroreflection. The microspheres can be flood coated onto the wet liquid pavement marking material after coating. This provides the liquid pavement marking material with improved retroreflectivity and also covers the top surface of the uncured or undried coating with a protective layer of microspheres. This protective layer can allow the markings to be exposed to traffic sooner because of the layer of microspheres over the surface, which prevents transfer of the coating to the surface of vehicle tires. The time between application and the point where material will no longer transfer to vehicle tires is defined as the "track-free" time. Shorter track-free times increase marking efficiency by reducing or eliminating the need for traffic disruption through such measures as closing lanes or placing traffic control devices to protect such markings.

### Summary

Pavement markings are subject to continuous wear and exposure to the elements as well as road chemicals. Consequently, there is a need for pavement marking compositions and pavement markers that provide durability and retained reflectivity once applied to a surface and dried and/or hardened. The inventors of the present patent application discovered a liquid pavement marking composition that exhibits improved physical properties. Some exemplary improved physical properties include, for example, durability and retained reflectivity once applied to a surface and dried or cured.

The inventors of the present application also recognized that it would be advantageous to apply liquid pavement markings in a wider range of weather conditions than is possible with existing compositions. There is also a need for liquid pavement marking compositions with improved cure profiles to ensure both substrate wet out and rapid track-free time. The inventors of the present application invented a liquid pavement marking composition capable of spontaneously curing, which provides significant manufacturing advantages in, for example, application time and improved cure profile.

Additionally, the inventors of the present application recognized that some existing pavement marking compositions include acrylates and/or initiators, both of which can be expensive and can lack thermal stability. Consequently, at least some embodiments of the liquid pavement marking compositions of the present application are acrylate and initiator-free. These embodiments provide cost advantages as well as increased thermal stability.

Some existing pavement marking compositions include a 1:3 NCO:NH volume ratio composition. These compositions typically include polyaspartic ester amines, and although they have excellent durability and whiteness, the compositions can suffer from substantial shrinkage, preventing these compositions from being applied to asphalt surfaces in longline applications.

Some existing pavement marking compositions include a 1:2 NCO:NH volume ratio composition. These compositions are typically applied to the roadway using standard spray equipment that also is used to apply 2:1 epoxy:NH coatings to roadways. The inventors of the present application recognized that because the isocyanate portion of the composition reacts with the amine residue in the spray equipment, extensive and complete flushing of the application system was required in order to ensure that the amine residue would not react with the pavement marking composition and causing it to seize and making application impossible as well as potentially significantly damaging the application equipment.

The compositions of the present application resolve the drawbacks associated with the currently available products. At least some compositions of the present application include a 2:1 NCO:NH volume ratio and are capable of use with standard application equipment without requiring system flushing. The resulting pavement marker is essentially free of undesirable shrinkage. Additionally, the resulting pavement marker is flexible, permitting excellent application to concrete or asphalt surfaces. Additionally, the pavement marking compositions of the present application do not require the use of any special light curing equipment and can be pigmented white or yellow, as desired. Lastly, at least some of the compositions of the present application are free of polyaspartic esters and as such do not experience undesirable shrinkage. The present application relates to a pavement marking composition, comprising: an isocyanate-containing component; and an amine-containing component; wherein the isocyanate-containing component is at least 35 weight percent of the composition.

In some implementations, the amine-containing component is a bis(alkylamino)alkyl amine. The volume ratio of the isocyanate-containing component to the amine-containing component is about 2:1. In some implementations, the stoichiometric ratio of the isocyanate-containing component to the amine-containing component is greater than about 1.2. In some implementations, the amine-containing component has a viscosity that is less than 50cSt at 38° C. In some implementations, the amine-containing component is a sterically hindered amine. In some implementations, the isocyanate-containing component is at least about 35 weight percent of the composition. In some implementations, the isocyanate-containing component has an equivalent weight of at least about 300g/eq. In some implementations, the shrinkage of a pavement marking including the pavement marking composition is less than 1.5%. In some implementations, the isocyanate-containing component includes one or more of isocyanurate groups, uretdione groups, biuret groups, and allophonate groups. In some implementations, the isocyanate-containing component includes one or more of hexamethylene diisocyanate, cyclohexane diisocyanate, 1,12-dodecane diisocyanate, 1,4-tetramethylene diisocyanate, isophorone diisocyanate, dicyclomethane diisocyanate, m-phenylene diisocyanate, p-phenylene diisocyanate, polymethylene polyphenylisocyanate, tetraalkyl xylene diisocyanate, toluene diisocyanate, dianisidine diisocyanate, bitolylene diisocyanate, naphthalene-1,4-diisocyanate, diphenylene 4,4'-diisocyanate, xylylene-1,3-diisocyanate, bis(4-isocyanatophenyl)methane, bis(3-methyl-4-isocyanatophenyl)methane, 4,4'-diphenylpropane diisocyanate, mixtures thereof, polymeric forms thereof, and an active hydrogen containing material selected from at least one polyol, a high molecular weight polyoxyalkyleneamine or a combination thereof. In some implementations, the amine-containing component includes polyoxyalkyleneamine.

These and various other features and advantages will be apparent from a reading of the following detailed description.

### Brief Description of Drawing

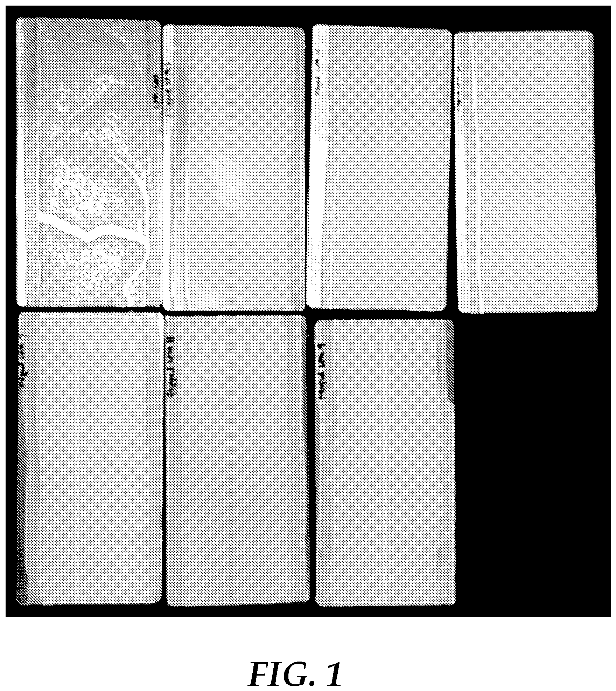

FIG. 1 is a photograph of the films of Comparative Example A and Example 1, 2, 4, 5, 6, and 7.

### Detailed Description

The present application relates to a pavement marking composition including (1) an isocyanate-containing component and (2) an amine-containing component. In some embodiments, the composition is substantially free of polyaspartic ester amines. The isocyanate-containing component is at least 35 weight percent of the composition. In some embodiments, the amine-containing component has a viscosity that is less than 50cSt at 38° C. The volume ratio of the isocyanate-containing component to the amine-containing component is between about 2:1. In some embodiments, the stoichiometric ratio of the isocyanate-containing component to the amine-containing component is greater than about 1.2. In some embodiments, these compositions spontaneously cure.

In some embodiments, when the isocyanate-containing component is combined with the amine-containing component, a polyurea resin is formed. The polyurea resin is a thermoset component.

### Amine-Containing Component

In some implementations, the amine-containing component is a bis(alkylamino)alkyl amine. In some implementations, the amine-containing component is a bis(alkylamino)alkyl amine represented by the formula

NH(R^{a}NHR^{b})²

where each R is, independently, an alkyl group having at least about three carbon atoms. Groups R in the above formula preferably have about two to about fifteen carbon atoms; more preferably, R groups have about two to about ten carbon atoms. R^{a} groups can be branched or linear, and preferably are linear. In the above formula, the R^{b} groups can be linear, branched, or cyclic; preferably, R^{b} groups are branched. Preferably, groups R^{b} have from three to about fifteen carbon atoms; more preferably, R^{b} groups have from four to about ten carbon atoms. Especially preferred groups R^{b} are branched alkyl groups that have from four to about ten carbon atoms.

Suitable R^{a} groups include, but are not limited to, methylene, ethylene, n-propylene, n- butylene, sec-butylene, n-pentylene, 2-pentylene, n-hexylene, 3-methyl-nhexylene, n-heptylene, n-octylene, n-nonylene, and 3-decylene groups. Preferred R^{a} groups include ethylene and n-propylene groups.

Examples of R^{b} groups include propyl, 2-butyl, 2-pentyl, 3-pentyl, 2-hexyl, 3-hexyl, 2-heptyl, 3-heptyl, 3-octyl, 4-octyl, 3-nonyl, 5-nonyl, 3-decyl, 4-dodecyl, 3-methyl-2-butyl, 3,3-dimethyl-2-butyl, 3-methyl-2-pentyl, 4-methyl-2-pentyl, 5-methyl-2-hexyl, 4-methyl-3 -heptyl, 2,6-dimethyl-3-heptyl, 6-undecyl, 7-tridecyl, 8-pentadecyl, 9-heptadecyl, 10-nonadecyl, 2,4-dimethyl-3-pentyl, 3,5-dimethyl-4-heptyl, cyclobutyl, cyclopentyl, cyclohexyl, cycloheptyl, cyclooctyl, 2-methylcyclopentyl, 3-ethylcyclopentyl, 2-methylcyclohexyl, 2-methyl-cyclooctyl, menthyl, 1-(cyclopropyl)ethyl, and the like.

Preferred as R^{b} groups are 2-butyl, 3-methyl-2-butyl, 3,3-dimethyl-2-butyl, and 4-methyl-2-pentyl groups.

Aliphatic bis[(alkylamino)alkyl]amine compositions include bis[(2-pentylamino)methyl]amine, bis[2-(2-butylamino)ethyl]amine, bis[2-(3-methyl-2butylamino) ethyl)]amine, bis[2-(3,3-dimethyl-2-butylamino)ethyl)]amine, bis[2-(4methyl-2-pentylamino)ethyl)] amine, di[2-(3-hexylamino)ethyl] [(3-hexylamino)methyl]amine, bis[3-(5-methyl-2-hexylamino)propyl)] amine, di[3-(cyclohexylamino)propyl)] [2-(cyclohexylamino)ethyl)]amine, bis[4-(cyclopentylamino)butyl] amine, bis[3(2,6-dimethyl-3-heptylamino)butyl] amine, bis[5-(2,4-dimethyl-3-pentylamino)pentyl]amine, bis[5-(3,5-dimethyl-4-heptylamino)-2-pentyl] amine, bis[6-(2-methylcyclohexylamino) hexyl]amine, bis[6-(3-ethylcyclopentylamino)-3-methyl-n-hexyl]amine, bis[7-(2butylamino) heptyl] amine, bis[8-(3-methyl-2-butylamino)octyl] amine, bis[9-(3,3-dimethyl2- butylamino)nonyl] amine, bis[10- 4-methyl-2-pentylamino)-3-decyl] amine, and the like. Preferred bis[(alkylamino)alkyl]amines of the invention include bis[2-(2butylamino) ethyl] amine, bis[2-(3-methyl-2-butylamino)ethyl)]amine, bis [2-(3,3-dimethyl2-butylamino)ethyl)] amine, and bis[2-(4-methyl-2-pentylamino)ethyl)]amine.

Exemplary methods of forming bis(alkylamino)alkyl amines are described, for example, in WO2010/101560 (Brown et al.).

In some implementations, the amine-containing component has a viscosity that is less than 50cSt at 38° C. In some implementations, the amine-containing component is a sterically hindered amine. In some implementations, the amine-containing component includes polyoxyalkyleneamine.

In some implementations, the amine-containing component includes an aspartic ester amine or a secondary amine monomer having at least two carbon atoms bonded to a nitrogen atom of the secondary amine monomer and at least one of the carbon atoms has two carbon atoms bonded to the carbon atom. The amine can include at least one polyamine. As used herein "polyamine" refers to compounds having at least two amine groups each containing at least one active hydrogen (N-H group) selected from primary amine or secondary amine. Polyamine also includes oligomeric or polymeric amines. The amine component can include aliphatic and/or aromatic polyamine(s). For improved weathering and diminished yellowing, the amine component is typically aliphatic. In order to obtain the preferred reaction rate, the amine component includes and may consist solely of one or more secondary amines. In many embodiments the secondary amines are sterically hindered amines.

A secondary sterically hindered amine is defined structurally as a secondary amine in which the amino group is attached to a secondary or a tertiary carbon atom. Secondary amines can include an aspartic ester amine. The aspartic ester amine can include a compound of formula: 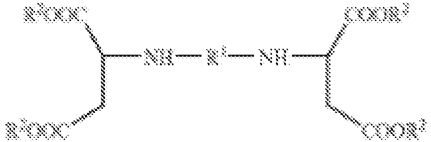 wherein R¹ is a divalent organic group having from 1 to 40 carbon atoms and R² is independently an organic group having from 1 to 40 carbon atoms or from 1 to 8 carbon atoms or from 1 to 4 carbon atoms. In some embodiments the aspartic ester amine includes a compound of formula:

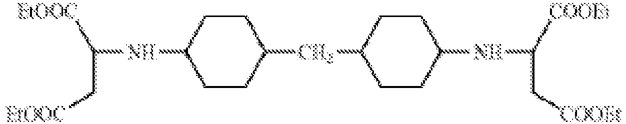

In other embodiments, the aspartic ester amine includes a compound of formula:

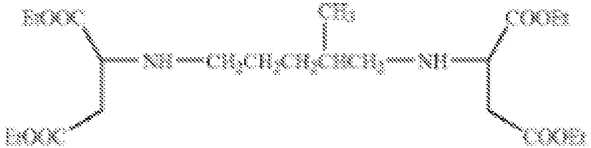

In some embodiments one or more amine-functional coreactants can be added to the aspartic ester amines. These amines (other than aspartic ester amines) can function as chain extenders and/or impact modifiers. The use of such amine-functional coreactant(s) can contribute to the presence of soft segments in the polymer backbone for improved toughness properties. Such amine-functional coreactants can be primary amines, secondary amines, or combinations thereof. In some embodiments, the amine-functional coreactant is an aliphatic diamine such as commercially available from Dorf Ketal Chemicals LLC, Stafford, TX, under the trade designation "Clearlink 1000".

### Isocyanate-Containing Component

The isocyanate-containing component is at least 35 weight percent of the composition. In some implementations, the isocyanate-containing component includes one or more of isocyanurate groups, uretdione groups, biuret groups, and allophonate groups. In some implementations, the isocyanate-containing component includes one or more of hexamethylene diisocyanate, cyclohexane diisocyanate, 1,12-dodecane diisocyanate, 1,4-tetramethylene diisocyanate, isophorone diisocyanate, dicyclomethane diisocyanate, m-phenylene diisocyanate, p-phenylene diisocyanate, polymethylene polyphenylisocyanate, tetraalkyl xylene diisocyanate, toluene diisocyanate, dianisidine diisocyanate, bitolylene diisocyanate, naphthalene-1,4-diisocyanate, diphenylene 4,4'-diisocyanate, xylylene-1,3-diisocyanate, bis(4-isocyanatophenyl)methane, bis(3-methyl-4-isocyanatophenyl)methane, 4,4'-diphenylpropane diisocyanate, and mixtures thereof, polymeric forms thereof, and an active hydrogen containing material selected from at least one polyol, a high molecular weight polyoxyalkyleneamine or a combination thereof.

In some implementations, the isocynate-containing component includes a polyisocyanate. "Polyisocyanate" means any organic compound that has two or more reactive isocyanate (-NCO) groups in a single molecule such as diisocyanates, triisocyanates, tetraisocyanates, etc., and mixtures thereof. Polyisocyanate also includes oligomeric or polymeric isocyanates. Cyclic and/or linear polyisocyanate molecules may usefully be employed. For improved weathering and diminished yellowing, the polyisocyanate(s) of the isocyanate component is typically aliphatic. Useful aliphatic polyisocyanates include, for example, bis(4-isocyanatocyclohexyl) methane such as available from Bayer Corp., Pittsburgh, Pa. under the trade designation "Desmodur W"; isophorone diisocyanate (IPDI) such as commercially available from Huels America, Piscataway, N.J.; hexamethylene diisocyanate (HDI) such as commercially available from Aldrich Chemical Co., Milwaukee, Wis.; trimethyl hexamethylene diisocyanate such as commercially available from Degussa, Corp., Dusseldorf, Germany under the trade designation "Vestanate TMDI"; and m-tetramethylxylene diisocyanate (TMXDI) such as commercially available from Aldrich Chemical Co., Milwaukee, Wis. Although typically less preferred, aromatic isocyanates such as diphenylmethane diisocyanate (MDI) such as commercially available from Bayer Corp., Pittsburgh, Pa. under the trade designation "Mondur M"; toluene 2,4-diisocyanate (TDI) such as commercially available from Aldrich Chemical Co., Milwaukee, Wis., and 1,4-phenylene diisocyanate are also useful. In many embodiments, the polyisocyanates include derivatives of the above-listed monomeric polyisocyanates. These derivatives include, but are not limited to, polyisocyanates containing biuret groups, such as the biuret adduct of hexamethylene diisocyanate (HDI) available from Bayer Corp. under the trade designation "Desmodur N-100", polyisocyanates containing isocyanurate groups, such as that available from Bayer Corp. under trade designation "Desmodur N-3300" or Desmodur N-3900, as well as polyisocyanates containing urethane groups, uretdione groups, carbodiimide groups, allophonate groups, and the like.

The compositions can also include pigments, viscosity-modifying agents, diluents, and fillers. Pigments can include inorganic pigments such as oxides of titanium, zinc, chromium or iron; organic pigments such as azo pigments, diarylide pigments, naphthol pigments, phthalo pigments; quinacridone pigments, diketopyrrolopyrrole pigments, and carbon black. Viscosity modifying agents can include liquids such as ketones, esters, and hydrocarbons; homopolymers or copolymers such as poly(styrene), poly(meth)acrylates such as poly(methyl methacrylate), and styrene-butadiene block copolymers; and silicas such as fumed silica and surface-modified fumed silica. Diluents can include liquids such as ketones, esters, and hydrocarbons. Fillers can include inorganic solids such as silica, zirconia, barium sulfate, and calcium carbonate.

In some implementations, the isocyanate-containing component has an equivalent weight of at least about 300g/eq.

In some implementations, the shrinkage of a pavement marking including the pavement marking composition is less than 1.5%.

The pavement marking compositions described herein can form a reactive mixture and can be applied to a traffic bearing surface to form a pavement marking. The pavement markings exhibit good adhesion to a wide variety of substrates and surfaces, including concrete and asphalt. Track-free time of the pavement marking is the time after the marking is applied before cars can drive on the marking without picking up and tracking the applied marking. The track-free time can be measured in the laboratory using ASTM D 711-89 or in the field using ASTM D713-90. Further, once applied to a traffic bearing surface, the pavement marking composition has a sufficient open time (*i.e*., the length of time the composition will remain in a liquid state after application to a surface) to adequately wet out to the surface being applied to in combination with good anchoring of the reflective elements.

In many embodiments, the pavement marking composition and/or pavement markings formed by the pavement marking compositions include reflective elements and/or optical elements. One exemplary type of reflective elements is retroreflective elements. One exemplary type of retroreflective elements is microcrystalline microspheres. The microcrystalline microspheres may be non-vitreous, as described in U.S. Pat. No. 4,564,556 (Lange) or the microspheres may comprise a glass-ceramic material, as described in U.S. Pat. No. 6,461,988. The retroreflective elements can have a refractive index of about 1.5 to about 2.6 and can have a diameter ranging from about 30 micrometers to about 100 micrometers. The approximate open time can be assessed using one of the tests in ASTM D1640-95. Alternatively, it can be determined by spraying a coating and applying reflective elements and determining the maximum time after spraying that the beads can be applied and good bead sinking and adhesion can be obtained. The pavement marking can have an open time as measured according to ASTM D1640-95 of at least about 30 seconds, or at least about 1 minute.

For embodiments wherein the marking is intended to provide nighttime visibility, the reactive mixture exhibits good adhesion to the retroreflective elements. Good adhesion to surface being applied to in combination with good adhesion to the retroreflective elements contribute to the retained retroreflectivity of the pavement marking. As used herein, "retained reflectivity" is used to describe the maintained retroreflective performance of a pavement marker over its useful life. Retroreflectivity of pavement markings is typically measured by a portable instrument in the field at a fixed entrance angle and observation angle according to ASTM E 1710-95a that approximates the conditions a driver actually views a pavement marking.

Pavements markings are often used to define lanes and therefore applied as continuous lines on the edge of a lane or in dashed lines separating lanes, referred to as skips. Such markings are referred to as longitudinal markings in that the lines run parallel to the direction of travel. In actual use a relatively small percent of vehicles using the road will actually traverse these markings. Alternatively, pavement markings are also used to mark intersections in the form of stopbars, continental blocks, or symbols and legends. In actual use, a relatively large percent of vehicles using the road will actually traverse such markings, or portions of such markings.

Advantages and embodiments of this disclosure are further illustrated by the following examples, but the particular materials and amounts thereof recited in these examples, as well as other conditions and details, should not be construed to unduly limit this disclosure. In these examples, all percentages, proportions and ratios are by weight unless otherwise indicated.

### Examples

**Materials**

| **Trade designation** | **Material** | **Supplier** |
|---|---|---|
| TOLONATE HDT-LV2 | Hexamethylene diisocyanate-based isocyanurate, having a viscosity of about 600 mPa.s | Perstorp Coatings, Inc, Freeport, TX. |
| DESMODUR N3300 | Hexamethylene diisocyanate-based isocyanurate having a viscosity of about 3,000 mPa.s | Bayer MaterialScience, Pittsburgh, PA |
| DESMODUR XP2599 | Allophonate-based isocyanate prepolymer having a viscosity of about 2,500 mPa.s | Bayer MaterialScience |
| DESMODUR N3800 | Flexibilized hexamethylene diisocyanate- based isocyanurate, having a viscosity of about 6,000 mPa.s | Bayer MaterialScience |
| KRASOL NN-32 | Toluene diisocyanate-based isocyanate prepolymer | Cray Valley USA, Warrington, PA |
| DESMODUR VPLS 2371 | Isophorone diisocyanate-based isocyanate prepolymer having a viscosity of about 11,000 mPa.s | Bayer MaterialScience |
| 3M K37 GLASS BUBBLES | Hollow glass microspheres | 3M Company |
| PURMOL 3ST | Molecular sieve powder | Zeochem, Louisville, KY |
| ETHACURE 90 | bis(alkylamino)alkyl amine, linear aliphatic sterically hindered secondary diamine | Albemarle, Baton Rouge, LA |
| CLEARLINK 1000 | Cycloaliphatic sterically hindered secondary diamine. | DorfKetal Chemicals, Stafford, TX |
| DESMOPHEN NH1420 | Cycloaliphatic polyaspartic ester diamine | Bayer MaterialScience |
| DESMOPHEN NH1220 | Linear aliphatic polyaspartic ester diamine | Bayer MaterialScience |
| Ti PURE 900 | Titanium dioxide pigment | DuPont Titanium Technologies, Wilmington, DE |
| DISPERBYK 111 | Dispersant additive | BYK USA, Wallingford, CT |
| CAB-O-SIL TS720 | Fumed silica with hydrophobic surface treatment | Cabot Corporation, Billerica, MA |
| OMYACARB 5FL | Calcium carbonate | Omya Inca, Proctor, VT |
| - | Acetone | JT Baker, Phillipsburg, NJ |
| JEFFAMINE ST-404 | Secondary triamine based on polyoxyalkyleneamine | Huntsman, The Woodlands, TX |
| JEFFAMINE SD-401 | Secondary diamine based on polyoxyalkyleneamine | Huntsman |

### Preparation of Component A:

A polyurea-based isocyanate prepolymer (Component A) was prepared as generally described in the Example of U.S. Patent Publication No. 2010/0247904 (Larson, et al).

### Comparative Example A and Examples 1 - 8:

Pavement marking compositions of Comparative Example A and Examples 1 through 8 were prepared by mixing an isocyanate-containing component with an amine-containing component. An isocyanate-containing component was prepared by mixing the ingredients in the order shown in Table 1, below. The amount of each ingredient is expressed in weight percent (wt%) based on the total weight of the isocyanate-containing component. The ingredients were mixed using a dual asymmetric centrifuge mixer (model "150DAC SpeedMixer" obtained from Flacktek, Landrum, SC) at a speed of 2750 rpm for about 2 minutes. Equivalent weight of the isocyanate-containing components (NCO Eq. wt) was calculated and is expressed in grams per equivalent (q/eq) in Table 1, below.

**Table 1**

| **Ingredients** | Comp. Example A (wt%) | Ex. 1 (wt%) | Ex. 2 (wt%) | Ex. 3 (wt%) | Ex. 4 (wt%) | Ex. 5 (wt%) | Ex. 6 (wt%) | Ex. 7 (wt%) | Ex. 8 (wt%) |
|---|---|---|---|---|---|---|---|---|---|
| TOLONATE HDT-LV2 | 0 | 20.0 | 8.9 | 19.2 | 8.8 | 29.7 | 20.0 | 30.0 | 19.4 |
| DESMODUR N3300 | 100.0 | 0 | 0 | 0 | 0 | 0 | 0 | 0 | 0 |
| DESMODUR XP2599 | 0 | 80.0 | 0 | 0 | 0 | 0 | 80.0 | 0 | 0 |
| DESMODUR N3800 | 0 | 0 | 80.4 | 0 | 0 | 0 | 0 | 0 | 0 |
| KRASOL NN-32 | 0 | 0 | 0 | 76.9 | 0 | 0 | 0 | 0 | 0 |
| COMPONENT A | 0 | 0 | 0 | 0 | 78.9 | 0 | 0 | 0 | 0 |
| DESMODUR VP LS2371 | 0 | 0 | 0 | 0 | 0 | 69.3 | 0 | 70.0 | 77.7 |
| 3M K37 GLASS BUBBLES | 0 | 0 | 10.7 | 3.9 | 12.3 | 1.0 | 0 | 0 | 2.9 |
| PURMOL 3ST | 0 | 0 | 0 | 0 | 0 | 0 | 0 | 0 | 0 |
| | | | | | | | | | |
| NCO Eq wt. (g/eq) | 193 | 446 | 385 | 370 | 360 | 442 | 446 | 438 | 564 |

An amine-containing component was prepared by mixing the ingredients in the order shown in Table 2, below. The amount of each ingredient is expressed in weight percent (wt%) based on the total weight of the amine-containing component. The ingredients were mixed using the dual asymmetric centrifuge mixer set at 2750 rpm for about 2 minutes.

**Table 2**

| **Ingredients** | Comp. Example A (wt%) | Ex. 1 (wt%) | Ex. 2 (wt%) | Ex. 3 (wt%) | Ex. 4 (wt%) | Ex. 5 (wt%) | Ex. 6 (wt%) | Ex. 7 (wt%) | Ex. 8 (wt%) |
|---|---|---|---|---|---|---|---|---|---|
| JEFFAMINE ST-404 | 0 | 0 | 0 | 0 | 0 | 0 | 0 | 0 | 24.9 |
| JEFFAMINE SD-401 | 0 | 0 | 0 | 0 | 0 | 0 | 0 | 0 | 24.9 |
| ETHACURE 90 | 0 | 0 | 0 | 0 | 0 | 0 | 44.4 | 47.2 | 0 |
| CLEARLINK 1000 | 0 | 49.5 | 48.7 | 50.0 | 49.5 | 49.3 | 0 | 0 | 0 |
| DESMOPHEN NH1420 | 7.7 | 0 | 0 | 0 | 0 | 0 | 0 | 0 | 0 |
| DESMOPHEN NH1220 | 30.9 | 0 | 0 | 0 | 0 | 0 | 0 | 0 | 0 |
| Ti PURE 900 | 29.9 | 22.3 | 22.0 | 22.5 | 22.3 | 22.2 | 20.0 | 21.2 | 22.5 |
| PURMOL 3ST | 7.7 | 1.5 | 1.5 | 1.5 | 1.5 | 1.5 | 1.3 | 1.4 | 1.5 |
| DISPERBYK 111 | 0.4 | 0 | 0 | 0 | 0 | 0 | 0 | 0 | 0 |
| CAB-O-SIL TS720 | 0 | 1.0 | 1.0 | 1.0 | 1.0 | 1.0 | 1.0 | 1.0 | 1.0 |
| OMYACARB 5FL | 22.0 | 25.7 | 26.8 | 25.0 | 25.7 | 26.0 | 33.3 | 29.2 | 25.4 |
| Acetone | 1.2 | 0 | 0 | 0 | 0 | 0 | 0 | 0 | 0 |

Pavement marking compositions were prepared by loading the isocyanate-containing component and the amine-containing component of Comparative Example A and Examples 1-8 into a dual cartridge syringe (MIXPAC 2:1 obtained from Brandywine Materials LLC, Burlington, MA) having a volume ratio 2:1 so that two volume fractions of the isocyanate-containing component reacted with one volume fraction of the amine-containing component. The mixture was dispensed from the cartridge through a 20-element static mixer at a temperature of about 25°C.

Isocyanate index (NCO INDEX), the ratio of the isocyanate equivalents to the amine equivalents in the total composition, was calculated and is shown in Table 3, below. Volume ratios of the isocyanate-containing component (NCO) to the amine-containing component (NH) were calculated and are also shown in Table 3, below.

**Table 3**

| | NCO INDEX | NCO:NH volume ratio |
|---|---|---|
| Comparative Example A | 1.08 | 0.50 |
| Example 1 | 1.10 | 2.00 |
| Example 2 | 1.10 | 2.00 |
| Example 3 | 1.10 | 2.00 |
| Example 4 | 1.10 | 2.00 |
| Example 5 | 1.10 | 2.00 |
| Example 6 | 1.10 | 2.00 |
| Example 7 | 1.10 | 2.00 |
| Example 8 | 1.10 | 2.00 |

The pavement marking compositions of Comparative Example A and Examples 1-8 were coated as a 25 mil (63.5 µm) thick film onto a 4 in by 8 in (10.2 cm by 20.3 cm) aluminum panel previously cleaned by wiping with acetone. The pavement marking compositions were allowed to cure at 25°C for 24 hours. The films were then placed in an oven (Model "115FD" obtained from BINDER Inc., Bohemia, NY) set at a temperature of about 115°C for about 48 hours. Fig. 1 is a photograph of some of the films after they were removed from the oven and allowed to cool down to room temperature. Comparative Example A showed significant shrinkage after being exposed to 115°C for about 48 hours. No shrinkage was observed for Examples 1, 2 4, 5, 6, or 7.

As used in this specification and the appended claims, the singular forms "a", "an", and "the" encompass embodiments having plural referents, unless the content clearly dictates otherwise. As used in this disclosure and the appended claims, the term "or" is generally employed in its sense including "and/or" unless the content clearly dictates otherwise.

Various embodiments and implementation of the present disclosure are disclosed. The disclosed embodiments are presented for purposes of illustration and not limitation. The implementations described above and other implementations are within the scope of the following claims. One skilled in the art will appreciate that the present disclosure can be practiced with embodiments and implementations other than those disclosed. Those having skill in the art will appreciate that many changes may be made to the details of the above-described embodiments and implementations without departing from the underlying principles thereof. It should be understood that this invention is not intended to be unduly limited by the illustrative embodiments and examples set forth herein and that such examples and embodiments are presented by way of example only with the scope of the invention intended to be limited only by the claims set forth herein as follows.

## Claims

1. A pavement marking composition, comprising:
an isocyanate-containing component; and
an amine-containing component;
wherein the isocyanate-containing component is at least 35 weight percent of the composition;
wherein the volume ratio of the isocyanate-containing component to the amine-containing component is 2:1.

2. The pavement marking composition of any of claim 1, wherein the amine-containing component has a viscosity that is less than 50cSt at 38° C.

3. The pavement marking composition of any of claims 1 or 2, wherein the amine-containing component is bis(alkylamino)alkyl amine.

4. The pavement marking composition of any of claims 1-3, wherein the amine-containing component is a sterically hindered amine.

5. The pavement marking composition of any of claims 1-4, wherein the isocyanate-containing component has an equivalent weight of at least 300g/eq.

6. The pavement marking composition of any of claims 1-5, wherein the shrinkage of a pavement marking including the pavement marking composition is less than 1.5 %

7. The pavement marking composition of any of claims 1-6, wherein the pavement marking composition is substantially free of polyaspartic ester amines.

8. The pavement marking composition of any of claims 1-7, wherein the isocyanate-containing component includes one or more of isocyanurate groups, uretdione groups, biuret groups, and allophonate groups.

9. The pavement marking composition of any of claims 1-8, wherein the isocyanate-containing component includes one or more of hexamethylene diisocyanate, cyclohexane diisocyanate, 1,12-dodecane diisocyanate, 1,4-tetramethylene diisocyanate, isophorone diisocyanate, dicyclomethane diisocyanate, m-phenylene diisocyanate, p-phenylene diisocyanate, polymethylene polyphenylisocyanate, tetraalkyl xylene diisocyanate, toluene diisocyanate, dianisidine diisocyanate, bitolylene diisocyanate, naphthalene-1,4-diisocyanate, diphenylene 4,4'-diisocyanate, xylylene-1,3-diisocyanate, bis(4-isocyanatophenyl)methane, bis(3-methyl-4-isocyanatophenyl)nethane, 4,4'-diphenylpropane diisocyanate, and polymeric forms thereof; and an active hydrogen containing material selected from at least one polyol, a high molecular weight polyoxyalkyleneamine or a combination thereof.

10. The pavement marking composition of any of claims 1-9, wherein the amine-containing component includes polyoxyalkyleneamine.

## Patentansprüche

1. Eine Fahrbahnmarkierungszusammensetzung, umfassend:
einen Isocyanat enthaltenden Bestandteil; und
einen Amin enthaltenden Bestandteil;
wobei der Isocyanat enthaltende Bestandteil mindestens 35 Gewichtsprozent der Zusammensetzung ausmacht;
wobei das Volumenverhältnis von dem Isocyanat enthaltendem Bestandteil zu dem Amin enthaltenden Bestandteil 2:1 beträgt.

2. Die Fahrbahnmarkierungszusammensetzung nach Anspruch 1, wobei der Amin enthaltende Bestandteil eine Viskosität von weniger als 50 cSt bei 38 °C aufweist.

3. Die Fahrbahnmarkierungszusammensetzung nach Anspruch 1 oder 2, wobei der Amin enthaltende Bestandteil Bis(alkylamino)alkylamin ist.

4. Die Fahrbahnmarkierungszusammensetzung nach einem der Ansprüche 1 bis 3, wobei der Amin enthaltende Bestandteil ein sterisch gehindertes Amin ist.

5. Die Fahrbahnmarkierungszusammensetzung nach einem der Ansprüche 1 bis 4, wobei der Isocyanat enthaltende Bestandteil ein Äquivalentgewicht von mindestens 300 g/Äq aufweist.

6. Die Fahrbahnmarkierungszusammensetzung nach einem der Ansprüche 1 bis 5, wobei die Schrumpfung einer Fahrbahnmarkierung, die die Fahrbahnmarkierungszusammensetzung enthält, weniger als 1,5 % beträgt.

7. Die Fahrbahnmarkierungszusammensetzung nach einem der Ansprüche 1 bis 6, wobei die Fahrbahnmarkierungszusammensetzung im Wesentlichen frei von Polyasparaginesteraminen ist.

8. Die Fahrbahnmarkierungszusammensetzung nach einem der Ansprüche 1 bis 7, wobei der Isocyanat enthaltende Bestandteil eine oder mehrere von Isocyanuratgruppen, Uretdiongruppen, Biuretgruppen und Allophonatgruppen enthält.

9. Die Fahrbahnmarkierungszusammensetzung nach einem der Ansprüche 1 bis 8, wobei der Isocyanat enthaltende Bestandteil eines oder mehrere der Folgenden enthält: Hexamethylendiisocyanat, Cyclohexandiisocyanat, 1,12-Dodecandiisocyanate, 1,4-Tetramethylendiisocyanat, Isophorondiisocyanat, Dicyclomethandiisocyanat, m-Phenylendiisocyanat, p-Phenylendiisocyanat, Polymethylenpolyphenylisocyanat, Tetraalkylxyloldiisocyanat, Toluoldiisocyanat, Dianisidindüsocyanat, Bitolylendüsocyanat, Naphthalin-1,4-düsocyanat, Diphenylen-4,4'-diisocyanat, Xylylen-1,3-diisocyanat, Bis(4-isocyanatphenyl)methan, Bis(3-methyl-4-isocyanatphenyl)methan, 4,4'-Diphenylpropandüsocyanat und polymere Formen davon; und ein aktives Wasserstoff enthaltendes Material, ausgewählt aus mindestens einem Polyol, einem Polyoxyalkylenamin mit hohem Molekulargewicht oder einer Kombination davon.

10. Die Fahrbahnmarkierungszusammensetzung nach einem der Ansprüche 1 bis 9, wobei der Amin enthaltende Bestandteil Polyoxyalkylenamin enthält.

## Revendications

1. Composition de marquage de chaussée, comprenant :
un composant contenant un isocyanate ; et
un composant contenant une amine ;
dans laquelle le composant contenant un isocyanate représente au moins 35 pour cent en poids de la composition ;
dans laquelle le rapport volumique du composant contenant un isocyanate au composant contenant une amine vaut 2:1.

2. Composition de marquage de chaussée selon la revendication 1, dans laquelle le composant contenant une amine a une viscosité qui est inférieure à 50 cSt à 38 °C.

3. Composition de marquage de chaussée selon l'une quelconque des revendications 1 ou 2, dans laquelle le composant contenant une amine est une bis(alkylamino)alkyl-amine.

4. Composition de marquage de chaussée selon l'une quelconque des revendications 1 à 3, dans laquelle le composant contenant une amine est une amine stériquement encombrée.

5. Composition de marquage de chaussée selon l'une quelconque des revendications 1 à 4, dans laquelle le composant contenant un isocyanate a un poids équivalent d'au moins 300 g/éq.

6. Composition de marquage de chaussée selon l'une quelconque des revendications 1 à 5, dans laquelle le retrait d'un marquage de chaussée incluant la composition de marquage de chaussée est inférieur à 1,5 %.

7. Composition de marquage de chaussée selon l'une quelconque des revendications 1 à 6, où la composition de marquage de chaussée est essentiellement dépourvue d'ester-amines polyaspartiques.

8. Composition de marquage de chaussée selon l'une quelconque des revendications 1 à 7, dans laquelle le composant contenant un isocyanate inclut un ou plusieurs parmi des groupes isocyanurate, des groupes uretdione, des groupes biuret et des groupes allophonate.

9. Composition de marquage de chaussée selon l'une quelconque des revendications 1 à 8, dans laquelle le composant contenant un isocyanate inclut un ou plusieurs parmi le düsocyanate d'hexaméthylène, le düsocyanate de cyclohexane, le düsocyanate de 1,12-dodécane, le düsocyanate de 1,4-tétraméthylène, le düsocyanate d'isophorone, le düsocyanate de dicyclométhane, le diisocyanate de m-phénylène, le düsocyanate de p-phénylène, le polyphénylisocyanate de polyméthylène, le düsocyanate de tétraalkyl-xylène, le düsocyanate de toluène, le düsocyanate de dianisidine, le düsocyanate de bitolylène, le 1,4-diisocyanate de naphtalène, le 4,4'-düsocyanate de diphénylène, le 1,3-diisocyanate de xylylène, le bis(4-isocyanatophényl)méthane, le bis(3-méthyl-4-isocyanatophényl)méthane, le düsocyanate de 4,4'-diphénylpropane, et les formes polymères de ceux-ci ; et un matériau contenant un hydrogène actif choisi parmi au moins un polyol, une polyoxyalkylène-amine à masse moléculaire élevée ou une combinaison de ceux-ci.

10. Composition de marquage de chaussée selon l'une quelconque des revendications 1 à 9, dans laquelle le composant contenant une amine inclut une polyoxyalkylène-amine.
